# EUROPEAN PATENT APPLICATION

(11) **EP 4 149 203 A1**
(43) Date of publication of application: **15.03.2023**
(21) Application number: 21879759.5
(22) Date of filing: 26.08.2021
(51) Int. Cl.: H04W 76/20, H04W 76/30, H04W 48/18, H04W 88/14

(54) **CORE NETWORK NODE FOR SESSION MANAGEMENT, CORE NETWORK NODE FOR MOBILITY MANAGEMENT, AND METHOD INVOLVING SAME**

(30) Priority: 16.10.2020 JP 2020174588
(71) Applicant: NEC Corporation, Minato-ku, Tokyo 108-8001 (JP)
(72) Inventor: TAMURA Toshiyuki, Tokyo 108-8001 (JP); TAKAKURA Tsuyoshi, Tokyo 110-0012 (JP)
(74) Representative: MacDougall, Alan John Shaw
(86) International application number: PCT/JP2021/031366
(87) International publication number: WO 2022/080017

(57) **Abstract**

A core network node for session management (3) receives , from a core network node for mobility management (2), a report indicating that an update to a restriction on use of a network slice by a UE (1) has occurred. The A core network node for session management (3) controls release or modification of an established PDU Session of the UE (1) associated with the network slice in response to receiving the report. This can contribute, for example, to achieving session management adapted to restrictions on the use of network slices.

## Description

### Technical Field

The present disclosure relates to radio communication networks, and in particular to network slicing.

### Background Art

The 5G system (5GS) supports network slicing. Network slicing makes it possible to create multiple logical networks or non-virtualized logical networks on top of physical networks. For example, network slicing may use Network Function Virtualization (NFV) and software-defined networking (SDN) technologies to create multiple virtualized logical networks on top of physical networks. Each logical network is called a network slice. A network slices provides specific network capabilities and network characteristics. In order to form a single network slice, a network slice instance (NSI) is defined as a set of network function (NF) instances, resources (e.g., computer processing resources, storage, and networking resources), and an access network (AN) (one or both of a Next Generation Radio Access Network (NG-RAN) and a Non-3GPP Interworking Function (N3IWF)).

A network slice is identified by an identifier known as Single Network Slice Selection Assistance Information (S-NSSAI). The S-NSSAI consists of a Slice/Service type (SST) and a Slice Differentiator (SD). The SST refers to the expected network slice behavior in terms of features and services. The SD is optional information and complements the SST to differentiate amongst multiple network slices of the same Slice/Service type.

An S-NSSAI can have standard values or non-standard values. Currently, standard SST values 1, 2, 3, and 4 are associated respectively with enhanced Mobile Broad Band (eMBB), Ultra-Reliable and Low-Latency Communication (URLLC), Massive Internet of Things (MIoT), and Vehicle to Everything (V2X) slice types. Anon-standard value of an S-NSSAI with identifies a single network slice within a specific Public Land Mobile Network (PLMN). In other words, non-standard values are PLMN-specific values, and associated with the PLMN ID of a PLMN that has assigned them. Each S-NSSAI ensures network isolation by selecting a particular NSI. A NSI may be selected via different S-NSSAIs. An S-NSSAI may be associated with different NSIs. A network slice may be uniquely identified by an S-NSSAI.

There are two types of S-NSSAI, which are known as S-NSSAI and Mapped S-NSSAI. An S-NSSAI identifies a network slice provided by the serving Public Land Mobile Network (PLMN) to which a UE is connected. Thus, when the UE is in its home network, an S-NSSAI identifies a network slice in the home network (e.g., Home PLMN (HPLMN)). During roaming, an S-NSSAI identifies a network slice of the roaming network (e.g., Visited PLMN (VPLMN)). A Mapped S-NSSAI may be an S-NSSAI of the Home PLMN (HPLMN) that is mapped to (or is associated with, or corresponds to) an S-NSSAI identifying a network slice of the roaming network when the UE is roaming, and may also be an S-NSSAI included in the UE user's subscription information among them.

Meanwhile, Network Slice Selection Assistance Information (NSSAI) means a set of S-NSSAIs. Accordingly, one or more S-NSSAIs can be included in one NSSAI. There are multiple types of NSSAI, known as Configured NSSAI, Requested NSSAI, Allowed NSSAI, Rejected NSSAI, and Pending NSSAI.

A Configured NSSAI includes one or more S-NNSAIs each applicable to one or more PLMNs. For example, The Configured NSSAI is configured by a Serving PLMN and is applied to the Serving PLMN. Alternatively, the Configured NSSAI may be a Default Configured NSSAI. The Default Configured NSSAI is configured by the Home PLMN (HPLMN) and applies to any PLMNs for which no specific Configured NSSAI has been provided. For example, a radio terminal (User Equipment (UE)) is provisioned with the Default Configured NSSAI from a Unified Data Management (UDM) of the HPLMN via an Access and Mobility Management Function (AMF).

A Requested NSSAI is signaled by a UE to a network in, for example, a registration procedure, allowing the network to determine a serving AMF, at least one network slice and at least one NSI, for this UE.

An allowed NSSAI is provided to a UE by a Serving PLMN and indicates one or more S-NSSAIs that the UE can use in the current registration area (RA) of the Serving PLMN. The Allowed NSSAI is determined by an AMF of the Serving PLMN, for example, during a registration procedure. The Allowed NSSAI is signaled to the UE by the network (i.e., AMF) and stored in memories (e.g., non-volatile memories) of both the AMF and the UE.

A Rejected NSSAI includes one or more S-NSSAIs rejected by the current PLMN. The Rejected NSSAI may be referred to as rejected S-NSSAIs. A S-NSSAI is rejected throughout the current PLMN or rejected in the current registration area (RA). If an AMF rejects any of one or more S-NSSAIs included in the Requested NSSAI, for example, in a registration procedure of a UE, it includes them in the Rejected NSSAI. The Rejected NSSAI is signaled to the UE by the network (i.e., AMF) and stored in memories of both the AMF and the UE.

A Pending NSSAI indicates one or more S-NSSAIs for which Network Slice-Specific Authentication and Authorization (NSSAA) is pending. A Serving PLMN shall perform NSSAA for S-NSSAI(s) of the HPLMN which are subject to NSSAA based on subscription information. In order to perform NSSAA, an AMF invokes an Extensible Authentication Protocol (EAP)-based authorization procedure. The EAP-based authentication procedure takes a relatively long time to obtain its outcome. Accordingly, whilst the AMF determines an Allowed NSSAI as described above during a registration procedure of a UE, it does not include S-NSSAI(s) subject to NSSAA in the Allowed NSSAI, but instead them in the Pending NSSAI. The Pending NSSAI is signaled to the UE by the network (i.e., AMF) and stored in memories of both the AMF and the UE.

The 3rd Generation Partnership Project (3GPP) is studying enhancements to network slices for Release 17. In addition, the 3GPP Technical Specification Group Services and System Aspects (TSG-SA) Working Group 1 (WG1) has approved a new working/study item for Release 18 to investigate the feasibility of Enhanced Access to and Support of Network Slice (see Non-Patent Literature 1). One of the objectives of this study item is to identify various deployment and usage scenarios of network slices, when there is a restriction of network slice to e.g., certain frequency bands/sub bands, RATs, geographical areas, networks and applications. Another one of the objectives of this study item is to identify various deployment and usage scenarios of network slices, when a User Equipment (UE) has a subscription to multiple network slices and these network slices are deployed for e.g., different frequency bands/sub bands, RATs, geographical area and applications.

### Citation List

### Non Patent Literature

[Non-Patent Literature 1] 3GPP SA WG1, "New WID on Study on Enhanced Access to and Support of Network Slice (from S1-202284)", SP-200571, 3GPP TSG SA Meeting # 88e, Electronic Meeting, June 30th - July 3rd, 2020
[Non-Patent Literature 2] 3GPP TS 23.501 V16.6.0 (2020-09) "3rd Generation Partnership Project; Technical Specification Group Services and System Aspects; System architecture for the 5G System (5GS); Stage 2 (Release 16)", September 2020

### Summary of Invention

### Technical Problem

At present, it is not clear how a UE and a network deal with various restrictions on the use of network slices (e.g., restrictions related to frequency bands, geographic areas, or applications). For example, it is not clear how a core network performs session management of a UE based on restrictions on the use of network slices.

One of the objects to be attained by embodiments disclosed herein is to provide apparatuses, methods, and programs that contribute to achieving session management adapted to restrictions on the use of network slices. It should be noted that this object is merely one of the objects to be attained by the embodiments disclosed herein. Other objects or problems and novel features will be made apparent from the following description and the accompanying drawings.

### Solution to Problem

In a first aspect, a core network node for session management includes at least one memory and at least one processor coupled to the at least one memory. The at least one processor is configured to receive, from a core network node for mobility management, a report indicating that an update to a restriction on use of a network slice by a UE has occurred. The at least one processor is further configured to control release or modification of an established PDU Session of the UE associated with the network slice in response to receiving the report.

In a second aspect, a core network node for mobility management includes at least one memory and at least one processor coupled to the at least one memory. The at least one processor is configured to, in response to an update of a restriction on use of a network slice by a UE, send a report to a core network node for session management indicating that the update of the restriction has occurred.

In a third aspect, a method performed by a core network node for session management includes the steps of:
(a) receiving, from a core network node for mobility management, a report indicating that an update to a restriction on use of a network slice by a UE has occurred; and
(b) controlling release or modification of an established PDU Session of the UE associated with the network slice in response to receiving the report.

In a fourth aspect, a method performed by a core network node for mobility management includes, in response to an update of a restriction on use of a network slice by a UE, sending a report to a core network node for session management indicating that the update of the restriction has occurred.

In a fifth aspect, a core network node for mobility management includes at least one memory and at least one processor coupled to the at least one memory. The at least one processor is configured to, in response to an update of a restriction on use of a network slice, request a core network node for session management to release an established PDU Session associated with the network slice or deactivate user plane resources of the established PDU Session.

In a sixth aspect, a method performed by a core network node for mobility management includes, in response to an update of a restriction on use of a network slice, requesting a core network node for session management to release an established PDU Session associated with the network slice or deactivate user plane resources of the established PDU Session.

In a seventh aspect, a core network node for mobility management includes at least one memory and at least one processor coupled to the at least one memory. The at least one processor is configured to receive from a UE a first Non-Access Stratum (NAS) message containing a Session Management (SM) message requesting establishment of a PDU Session. The at least one processor is configured to determine whether or not a usage restriction is, or needs to be, imposed on a network slice identifier associated with the PDU Session. The at least one processor is configured to, if the usage restriction is imposed or needs to be imposed on the network slice identifier, stop forwarding the SM message to a core network node for session management and reject the NAS message. The usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

In an eighth aspect, a method performed by a core network node for mobility management includes the steps of:
(a) receiving from a UE a first NAS message containing an SM message requesting establishment of a PDU Session;
(b) determining whether or not a usage restriction is, or needs to be, imposed on a network slice identifier associated with the PDU Session; and
(c) if the usage restriction is imposed or needs to be imposed on the network slice identifier, stopping forwarding the SM message to a core network node for session management and rejecting the NAS message. The usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

In a ninth aspect, a core network node for mobility management includes at least one memory and at least one processor coupled to the at least one memory. The at least one processor is configured to receive from a UE a NAS message containing an SM message requesting establishment of a PDU Session. The at least one processor is configured to determine whether or not a usage restriction needs to be imposed on a network slice identifier associated with the PDU Session. The at least one processor is configured to, if the usage restriction needs to be imposed on the network slice identifier, forward the SM message to a core network node for session management with an indication that the establishment of the PDU Session needs to be rejected due to the usage restriction. The usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

In a tenth aspect, a core network node for session management includes at least one memory and at least one processor coupled to the at least one memory. The at least one processor is configured to receive, from a core network node for mobility management, a control message containing a first SM message requesting establishment of a PDU Session for a UE. The at least one processor is configured to reject the establishment of the PDU Session if the control message contains an indication that the establishment of the PDU Session needs to be rejected due to a usage restriction. The usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

In an eleventh aspect, a method performed by a core network node for mobility management includes the steps of:
(a) receiving from a UE a NAS message containing an SM message requesting establishment of a PDU Session;
(b) determining whether or not a usage restriction needs to be imposed on a network slice identifier associated with the PDU Session; and
(c) if the usage restriction needs to be imposed on the network slice identifier, forwarding the SM message to a core network node for session management with an indication that the establishment of the PDU Session needs to be rejected due to the usage restriction. The usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

In a twelfth aspect, a method performed by a core network node for session management includes the steps of:
(a) receiving, from a core network node for mobility management, a control message containing a first SM message requesting establishment of a PDU Session for a UE; and
(b) rejecting the establishment of the PDU Session if the control message contains an indication that the establishment of the PDU Session needs to be rejected due to a usage restriction. The usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

In a thirteenth aspect, a program includes a set of instructions (software codes) that, when loaded into a computer, cause the computer to perform the method according to the third, fourth, sixth, eighth, eleventh, or twelfth aspect described above.

### Advantageous Effects of Invention

According to the above-described aspects, it is possible to provide apparatuses, methods, and programs that contribute to achieving session management adapted to restrictions on the use of network slices.

### Brief Description of Drawings

Fig. 1 shows an example configuration of a communication network according to an embodiment;
Fig. 2 is a flowchart showing an example of an operation of an AMF according to an embodiment;
Fig. 3 is a flowchart showing an example of an operation of a SMF according to an embodiment;
Fig. 4 is a sequence diagram showing an example of operations of a UE, an AMF, and a SMF according to an embodiment;
Fig. 5 is a sequence diagram showing an example of operations of a UE, an AMF, and a SMF according to an embodiment;
Fig. 6 is a sequence diagram showing an example of operations of a UE, an AMF, and a SMF according to an embodiment;
Fig. 7 is a sequence diagram showing an example of operations of a UE and an AMF according to an embodiment;
Fig. 8 is a flowchart showing an example of an operation of an AMF according to an embodiment;
Fig. 9 is a flowchart showing an example of an operation of an AMF according to an embodiment;
Fig. 10 is a flowchart showing an example of an operation of an AMF according to an embodiment;
Fig. 11 is a sequence diagram showing an example of operations of an AMF and another NF according to an embodiment;
Fig. 12 is a sequence diagram showing an example of operations of a UE, an AMF, and a SMF according to an embodiment;
Fig. 13 is a flowchart showing an example of an operation of an AMF according to an embodiment;
Fig. 14 is a block diagram showing an example configuration of a UE according to an embodiment; and
Fig. 15 is a block diagram showing an example configuration of an AMF and an SMF according to an embodiment.

### Example Embodiment

Specific embodiments will be described hereinafter in detail with reference to the drawings. The same or corresponding elements are denoted by the same symbols throughout the drawings, and duplicated explanations are omitted as necessary for the sake of clarity.

Each of the embodiments described below may be used individually, or two or more of the embodiments may be appropriately combined with one another. These embodiments include novel features different from each other. Accordingly, these embodiments contribute to attaining objects or solving problems different from one another and contribute to obtaining advantages different from one another.

The following descriptions on the embodiments mainly focus on the 3GPP fifth generation mobile communication system (5G system (5GS)). However, these embodiments may be applied to other cellular communication systems that support network slicing as well as 5GS.

### First Embodiment

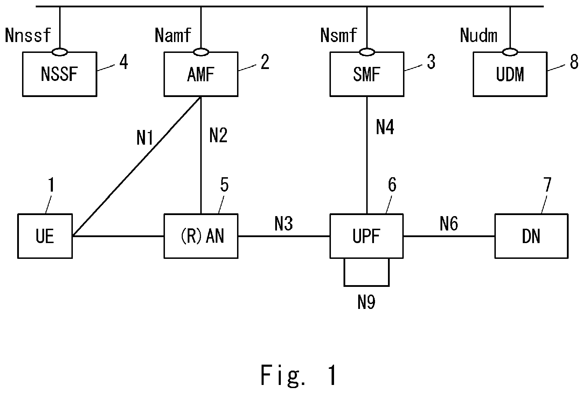

Fig. 1 shows an example configuration of a communication network (i.e., 5GS) according to this embodiment. Each of the elements shown in Fig. 1 is a network function and provides an interface as defined by the 3rd Generation Partnership Project (3GPP). Each of the elements (network functions) shown in Fig. 1 can be implemented, for example, as a network element on dedicated hardware, as a software instance running on dedicated hardware, or as a virtual function instantiated on an application platform.

The cellular network shown in Fig. 1 may be provided by a Mobile Network Operator (MNO), or it may be a Non-Public Network (NPN) provided by a non-MNO. If the cellular network shown in Fig. 1 is an NPN, it may be an independent network, represented as a Standalone Non-Public Network (SNPN), or it may be an NPN linked to an MNO network, represented as a public network integrated NPN (PNI-NPN).

A radio terminal (i.e., UE) 1 communicates with a data network (DN) 7 using the 5G connectivity service. More specifically, the UE 1 is connected to an access network (i.e., 5G Access Network (5GAN)) 5 and communicates with the data network (DN) 7 via a User Plane Function (UPF) 6 in a core network (i.e., 5G core network (5GC)). The AN 5 may include a Next Generation Radio Access Network (NG-RAN) or a non-3GPP AN, or both. The Non-3GPP AN may be a network that handles wireless LAN (WiFi) communication or a network that handles wired communication, known as a Wireline 5G Access Network (W-5GAN). The UPF 6 may include multiple UPFs that are interconnected.

The UE 1 establishes one or more Protocol Data Unit (PDU) Sessions between the UE 1 and the UPF 6 (i.e., PDU Session anchor) to which the DN 7 is connected. A PDU Session is an association, session, or connection between the UE 1 and the DN 7, and is used to provide a PDU connectivity service (i.e., an exchange of PDUs between UE 1 and DN 7). From a data transfer perspective, a PDU Session consists of a tunnel within the 5GC (N9 tunnel), a tunnel between the 5GC and the AN 5 (N3 tunnel), and one or more radio bearers. Although not shown in Fig. 1, the UE 1 may establish multiple PDU Sessions with multiple UPFs (PDU Session anchors) 6 to access multiple DNs 7 concurrently.

The AMF 2 is a network function within the 5GC Control Plane. The AMF 2 provides termination of a (R)AN Control Plane (CP) interface (i.e., N2 interface). The AMF 2 terminates a single signalling connection (i.e., NAS signalling connection) with the UE 1 and provides registration management, connection management, and mobility management. The registration management is used to register or deregister the UE 1 in the network (5G system). The connection management is used to establish and release the NAS signaling connection between the UE 1 and the AMF 2. The mobility management is used to keep track of the location of the UE 1. The mobility management uses a periodic registration update procedure and a mobility registration update procedure. Accordingly, in the 5G System, it can be said that the mobility management is part of the registration management.

The AMF 3 provides NF services on a service-based interface (i.e., Namf interface) to NF consumers (e.g., other AMFs, and Session Management Function (SMF) 3). The NF services provided by the AMF 2 include a communication service (Namf_Communication). The communication service allows NF consumers (e.g., SMF 3) to communicate with the UE 1 or the AN 5 via the AMF 2. In addition, AMF 2 utilizes NF services provided by other NFs (e.g., Network Slice Selection Function (NSSF) 4 and Unified Data Management (UDM) 8).

The SMF 3 is a network function within the 5GC Control Plane. The SMF 3 provides session management. The session management is used to establish, modify, and release a PDU Session in order to provide a PDU Connectivity Service to the UE 1. The session management includes signaling with the UE 1, AMF 2, and UPF 6 for the establishment, modification, and release of a PDU Session.

The SMF 3 sends and receives Session Management (SM) signaling messages (NAS-SM messages, N1 SM messages) to and from the Non-Access-Stratum (NAS) SM layer of the UE 1. The SMF 3 provides NF services on a service-based interface (i.e., Nsmf interface) to NF consumers (e.g., AMF 2, other SMFs). The NF services provided by the SMF 3 include session management services (Nsmf_PDUSession). This NF Service allows NF Consumers (e.g., AMF 2) to handle PDU Sessions. The SMF 3 may be an Intermediate SMF (I-SMF), which is inserted between the AMF 2 and the original SMF as needed when the UPF 6 belongs to a different SMF service area and cannot be controlled by the original SMF.

The NSSF 4 is a network function within the 5GC Control Plane. The AMF 2 or the NSSF 4 determines a mapping of Configured NSSAI for the Serving PLMN (i.e., VPLMN) to HPLMN Subscribed S-NSSAI(s). In addition, the AMF 2 or the NSSF 4 determines a mapping of Allowed NSSAI for the Serving PLMN (i.e., VPLMN) to HPLMN Subscribed S-NSSAI(s). The Configured NSSAI is provisioned in the UE 1 by the serving PLMN (i.e., VPLMN) during a Registration procedure or a UE Configuration Update procedure. The Configured NSSAI includes at least one S-NSSAI, each of which is applicable to at least one PLMN. On the other hand, the Allowed NSSAI indicates at least one S-NSSAI that the UE 1 can use in the current Registration Area of the serving PLMN (i.e., VPLMN). The Allowed NSSAI is provisioned within the UE 1 by the serving PLMN (i.e., VPLMN), e.g., during a registration procedure.

The UDM 8 is a network function within the 5GC Control Plane. The UDM 8 provides access to a database (i.e., User Data Repository (UDR)) containing subscriber data (or subscription information). The UDM 8 provides NF services on a service-based interface (i.e., Nudm interface) to NF consumers (e.g., AMF 2 and SMF 3). The NF services provided by the UDM 8 include subscriber data management services. This NF service enables NF consumers (e.g., AMF 2) to retrieve subscriber data and provides updated subscriber data to NF consumers.

The network function that stores subscriber data (or subscription information) may be the UDM 8 or the UDR. If the network operator's network design or operating policy uses a split architecture that separates data management and data repository, then the UDR may be used to store subscriber data. On the other hand, if the split architecture is not used, the UDM 8 may be used to store subscriber data. In this specification, the network function that stores subscriber data may be the UDM 8 or the UDR.

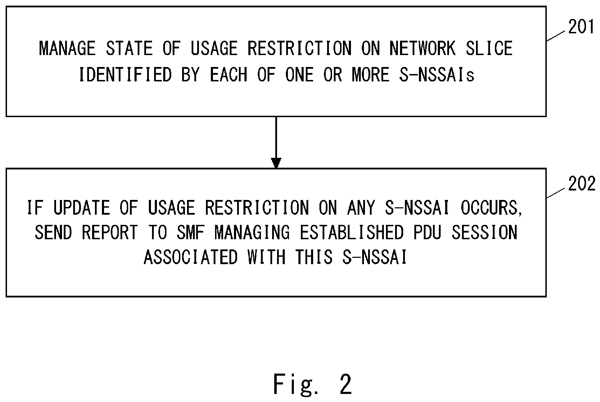

Session management according to this embodiment will be described in detail below. Fig. 2 shows an example of the operation of the AMF 2. In step 201, the AMF 2 manages the status of Network Slice Restriction (NSR). Specifically, the AMF 2 manages whether there are usage restrictions on a network slice identified by each of one or more S-NSSAIs. Usage restrictions on a network slice may include at least one of: a restriction on radio frequencies (e.g., frequency bands or sub-bands) with which the network slice is available, a restriction on radio access technologies with which the network slice is available, a restriction on geographic areas in which the network slice is available, a restriction on applications with which the network slice is available, or a restriction based on priorities among multiple network slices.

In one example, the AMF 2 may recognize that a given S-NSSAI is in an NSR state in which it is available only in one or more specific frequency bands, or that it is in an NSR state in which it is not available in one or more specific frequency bands. The AMF 2 may recognize that a given S-NSSAI is in an NSR state in which it is available only in one or more specific RATs, or that it is in an NSR state in which it is not available in one or more specific RATs. In one example, the AMF 2 may recognize that a given S-NSSAI is in an NSR state where it is available only in one or more specific geographic areas, or that it is in an NSR state where it is not available in one or more specific geographic areas. Each geographic area may be a tracking area or a cell. In one example, the AMF 2 may recognize that a given S-NSSAI is in an NSR state where it is available only for one or more specific applications (or services), or that it is in an NSR state where it is not available for one or more specific applications (or services). In one example, the AMF 2 may recognize that a plurality of S-NSSAIs are in an NSR state where there are priorities among multiple network slices (S-NSSAIs). For example, the AMF 2 may recognize that when a network slice given a higher priority is being used by the UE 1, a network slice with a lower priority cannot be used by the same UE 1 at the same time. Alternatively, the AMF 2 may recognize that a given S-NSSAI (network slice) is in an NSR state where it cannot be used simultaneously with other S-NSSAI(s) (network slice(s)).

In step 202, if an update of restrictions on the use of a particular S-NSSAI for the UE 1 (i.e., an update of the NSR state of the UE 1) occurs, the AMF 2 sends to the SMF 3 a report indicating a NSR status update. The AMF 2 may send the report to the SMF 3 that controls an established PDU Session of the UE 1 associated with that S-NSSAI. The report allows the SMF 3 to control release or modification of the established PDU Session associated with that S-NSSAI in response to the NSR status update.

The report indicating the NSR status update in step 202 may indicate the S-NSSAI and the NSR status for that S-NSSAI. The report may indicate that the NSR state is active, inactive, or unknown. The active state means that use of the corresponding S-NSSAI is restricted. The inactive state means that the usage restriction of the corresponding S-NSSAI is not in effect. The unknown state means that it is not known whether the corresponding S-NSSAI is restricted or not.

The report indicating the NSR status update in step 202 may be provided to the SMF 3 via an Application Program Interface (API) of an event notification service (i.e., Namf_EventExposure Service) provided by the AMF 2. More specifically, the SMF 3, as an NF Service Consumer, requests the AMF 2 to create a new subscription when it needs a subscription to monitor at least one event related to the NSR state of at least one S-NSSAI. In order to indicate the Subscription Target, the SMF 3 includes an identifier identifying a specific UE (or group of UEs) and a list of events to be subscribed (e.g., a list of S-NSSAI(s)) in the request. If the request is accepted, the AMF 2 notifies the SMF 3 of the generation of the event subscription. Subsequently, when a subscribed event regarding NSR status notification occurs, the AMF 2 sends a notification to the SMF 3.

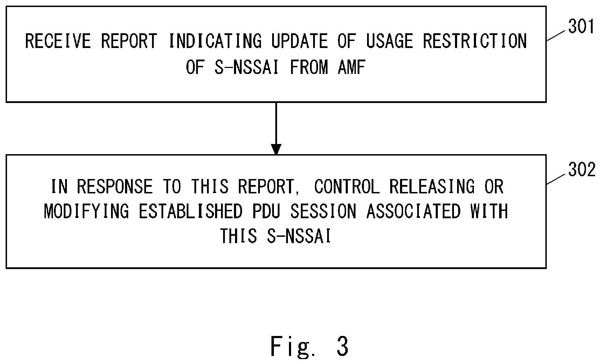

Fig. 3 shows an example of the operation of the SMF 3. In step 301, the SMF 3 receives a report from the AMF 2 indicating a restriction on the use of a particular S-NSSAI by the UE 1 (i.e., an update of the NSR state of the UE 1). In step 302, in response to the report, the SMF 3 controls release or modification of an established PDU Session of the UE 1 associated with that S-NSSAI. For example, the SMF 3 may initiate releasing the established PDU Session or deactivating the user plane resources of the established PDU Session if the report indicates that the use of the network slice by the UE 1 is restricted. Similarly, the SMF 3 may reject modification of the established PDU Session requested by the UE 1 if the report indicates that there are restrictions on the use of the network slice by UE 1.

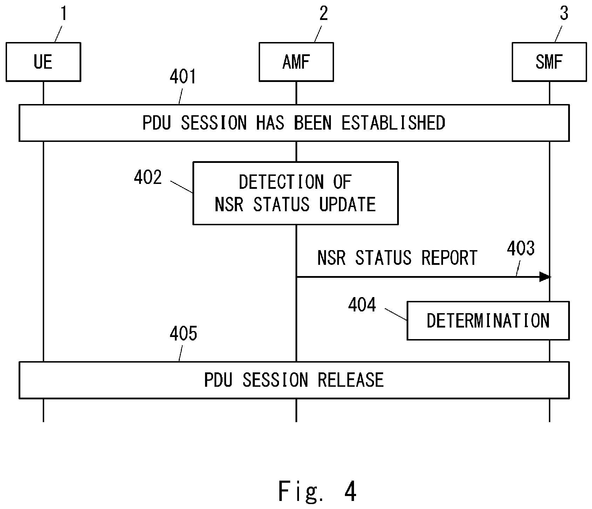

Fig. 4 shows an example of a PDU Session release procedure initiated by the SMF 3. In step 401, the UE 1 establishes a PDU Session. Step 401 may be performed according to an existing PDU Session establishment procedure. In step 402, the AMF 2 detects an update of the NSR state of the UE 1 with respect to at least one S-NSSAI. For example, the AMF 2 may detect that the UE 1 has moved from a geographic area where a network slice is available to another geographic area where the use of the network slice is restricted. Each geographic area may be indicated by a set of Tracking Area Identities (TAIs) (or list of TAIs), a set of E-UTRAN Cell Global Identifications (ECGIs) (or list of ECGIs), or a set of NR Cell Global Identities (NCGIs) (or list of NCGIs). Alternatively, each geographic area may be an Allowed Area, Non-Allowed Area, Forbidden Area, or Mobility Pattern as specified in Non-Patent Literature 2.

In step 403, the AMF 2 sends a report indicating the NSR state update to the SMF 3. This report indicates a restriction on the use of a particular S-NSSAI by the UE 1 (i.e., an update of the NSR state of the UE 1). In step 404, if the report indicating the NSR status update indicates that there is a restriction on the use of a particular S-NSSAI by the UE 1, the SMF 3 decides to release the established PDU Session of the UE 1 for that S-NSSAI. More specifically, if the S-NSSAI associated with the established PDU Session is included in the report indicating the NSR status update, if the NSR state indicates that the use of the S-NSSAI is restricted, and if the SMF 3 decides to release the established PDU Session, the SMF 3 determines the release of the established PDU Session associated with the S-NSSAI.

In step 405, the SMF 3 initiates a PDU Session Release procedure. The SMF 3 sends a PDU Session Release Command message to the UE 1 via the AMF 2. The PDU Session Release Command message may include a new 5GSM cause value indicating that the use of the S-NSSAI is restricted.

The procedure in Fig. 4 may be modified as follows. In step 404, if the report indicating the NSR state update indicates that there is a restriction on the use of a particular S-NSSAI by the UE 1, the SMF 3 may decide to deactivate the user plane resources of an established PDU Session of the UE 1 for that S-NSSAI. In step 405, the SMF 3 may signal with the UPF 6 to deactivate the user plane resources of the PDU Session.

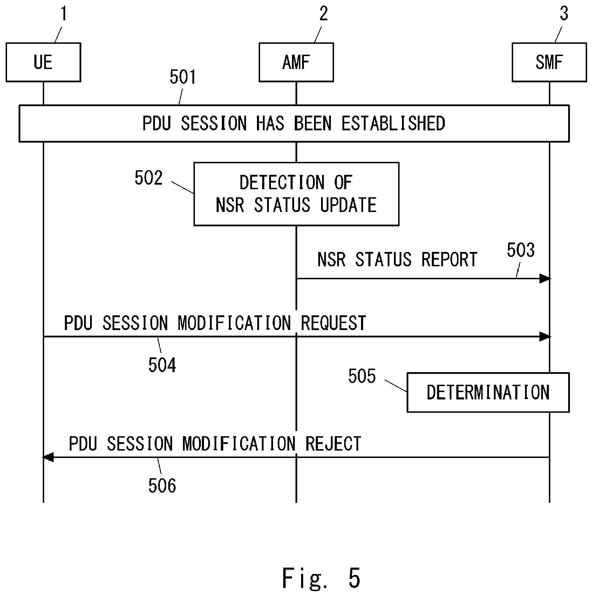

Fig. 5 shows an example of a PDU Session Modification procedure. Steps 501-503 are the same as steps 401-403 in Fig. 4. In step 504, the SMF 3 receives a PDU Session Modification Request message from the UE 1. The PDU Session Modification Request message requests modification of a PDU Session for a particular S-NSSAI. In step 505, the SMF 3 determines, based on the report of step 503, that the UE 1 is restricted from using that S-NSSAI.

In step 506, the SMF 3 sends a PDU Session Modification Reject message to the UE 1. The PDU Session Modification Reject message may include a new 5 GSM cause value indicating that the use of the S-NSSAI is restricted. More specifically, in step 506, if the S-NSSAI associated with the established PDU Session to which the PDU Session Modification Request message is directed is included in the report indicating the NSR status update, if the NSR state indicates that the use of the S-NSSAI is restricted, and if the SMF 3 decides to reject the PDU Session Modification Request, the SMF 3 sends the PDU Session Modification Reject message to the UE 1.

As understood from the above description, in this embodiment, the AMF 2 notifies the SMF 3 of the status of restrictions on the use of a particular network slice by the UE 1. The SMF 3 then controls release or modification of an established PDU Session of the UE 1 for that network slice in response to the notification from the AMF 2. This contributes to achieving session management adapted to restrictions on the use of network slices.

### Second Embodiment

An example configuration of a communication network according to this embodiment is the same as the example described with reference to Fig. 1. This embodiment provides a modification to the first embodiment.

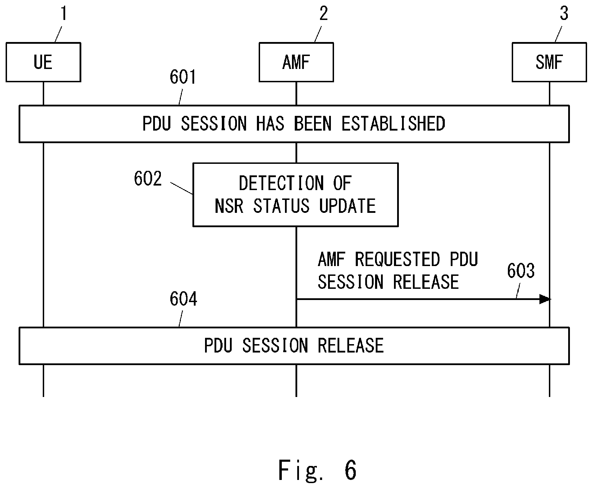

Fig. 6 shows an example of a PDU Session release procedure triggered by the AMF 2. In step 601, the UE 1 establishes a PDU Session. Step 601 may be performed according to an existing PDU Session establishment procedure.

In step 602, the AMF 2 detects an update of an NSR state of the UE 1 with respect to at least one S-NSSAI. The operation of the AMF 2 in step 602 is similar to the corresponding operation described in the first embodiment (e.g., step 201 in Fig. 2, step 402 in Fig. 4). In the example in Fig. 6, the AMF 2 detects that there is a restriction on the use of a particular network slice (a particular S-NSSAI) by the UE 1. In step 603, the AMF 2 requests the SMF 3 to release an established PDU Session of the UE 1 for that particular network slice. This request (or trigger) may include a Cause information element set to a new value (e.g., REL_DUE_TO_SLICE_NWRESTRICTION) to indicate to the SMF 3 that this is based on a network slice usage restriction. In step 604, the SMF 3 initiates a PDU Session Release procedure in response to the request (or trigger) of step 603. The SMF 3 sends a PDU Session Release Command message to the UE 1 via the AMF 2. The PDU Session Release Command message may include a new 5GSM cause value indicating that the use of the S-NSSAI is restricted.

The procedure in Fig. 6 may be modified as follows. In step 604, the SMF 3 may initiate deactivation of the user plane resources of the established PDU Session of the UE 1 for the S-NSSAI. The SMF 3 may signal with the UPF 6 to deactivate the user plane resources of the PDU Session.

As understood from the above description, in this embodiment, if the use of a particular network slice by the UE 1 is restricted, the AMF 2 requests the SMF 3 to release an established PDU Session of the UE 1 for that network slice. This contributes to achieving session management adapted to restrictions on the use of network slices.

### Third Embodiment

An example configuration of a communication network according to this embodiment is the same as the example described with reference to Fig. 1. This embodiment provides the behavior of the AMF 2 when the AMF 2 receives from the UE 1 a NAS message (i.e., UL NAS Transport) containing an SM message (i.e., PDU Session Establishment Request) requesting the establishment of a PDU Session associated with an S-NSSAI that the UE 1 is not allowed to use.

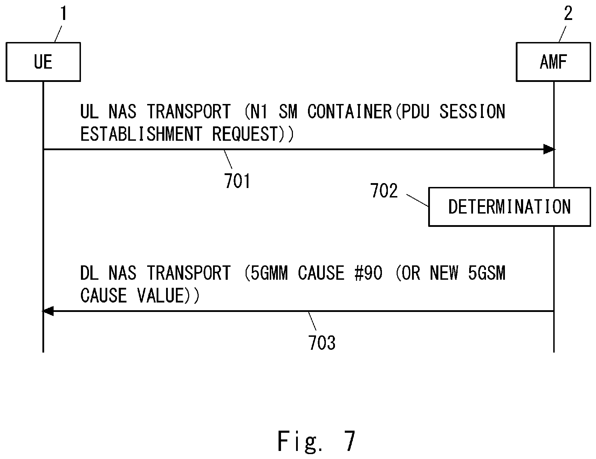

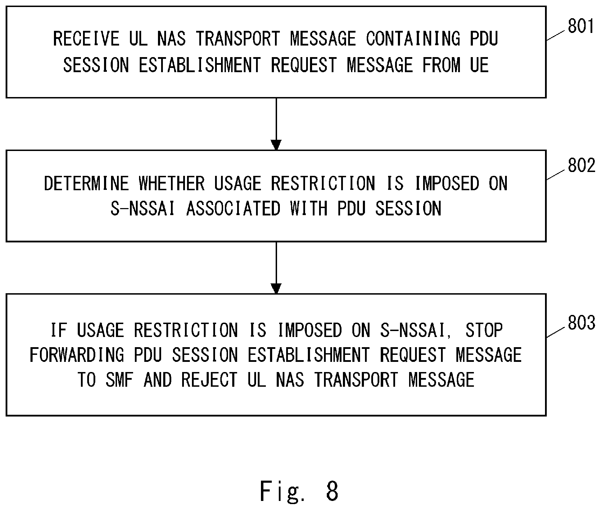

Fig. 7 shows an example of signaling between the UE 1 and AMF 2. Fig. 8 shows an example of the operation of the AMF 2. In step 701, the UE 1 sends a UL NAS Transport message containing an N1 SM container (PDU Session Establishment Request) to the AMF 2 via the AN 5. In other words, the AMF 2 receives a UL NAS Transport message containing a PDU Session Establishment Request message from the UE 1 (step 801).

The AMF 2 manages whether there are usage restrictions on a network slice identified by each of one or more S-NSSAIs. Usage restrictions on a network slice may include at least one of: a restriction on radio frequencies (e.g., frequency bands or sub-bands) with which the network slice is available, a restriction on radio access technologies with which the network slice is available, a restriction on geographic areas in which the network slice is available, a restriction on applications with which the network slice is available, or a restriction based on priorities among multiple network slices.

In one example, the AMF 2 may recognize that a given S-NSSAI is in an NSR state in which it is available only in one or more specific frequency bands, or that it is in an NSR state in which it is not available in one or more specific frequency bands. The AMF 2 may recognize that a given S-NSSAI is in an NSR state in which it is available only in one or more specific RATs, or that it is in an NSR state in which it is not available in one or more specific RATs. In one example, the AMF 2 may recognize that a given S-NSSAI is in an NSR state where it is available only in one or more specific geographic areas, or that it is in an NSR state where it is not available in one or more specific geographic areas. Each geographic area may be a tracking area or a cell. In one example, the AMF 2 may recognize that a given S-NSSAI is in an NSR state where it is available only for one or more specific applications (or services), or that it is in an NSR state where it is not available for one or more specific applications (or services). In one example, the AMF 2 may recognize that a plurality of S-NSSAIs are in an NSR state where there are priorities among multiple network slices (S-NSSAIs). For example, the AMF 2 may recognize that when a network slice given a higher priority is being used by the UE 1, a network slice with a lower priority cannot be used by the same UE 1 at the same time. Alternatively, the AMF 2 may recognize that a given S-NSSAI (network slice) is in an NSR state where it cannot be used simultaneously with other S-NSSAI(s) (network slice(s)).

In steps 702 and 802, the AMF 2 determines whether a usage restriction is imposed on an S-NSSAI associated with the PDU Session requested by the UE 1. In steps 703 and 803, if a usage restriction is imposed on the S-NSSAI, the AMF 2 stops forwarding the PDU Session Establishment Request message to the SMF 3 and rejects the UL NAS Transport message. As indicated in step 703, the AMF 2 may send a DL NAS Transport message to the UE 1. The DL NAS Transport message may contain the rejected N1 SM container (PDU Session Establishment Request). The DL NAS Transport message may include a message identifier, message sequence number, or other identifier of the UL NAS Transport message to indicate its association with the rejected UL NAS Transport message. The DL NAS Transport message may indicate an existing 5GMM Cause value (e.g., 5GMM cause #90 "payload was not forwarded"). Alternatively, the DL NAS Transport message may contain a new 5GMM cause value indicating that the SM message is not forwarded due to slice usage restrictions.

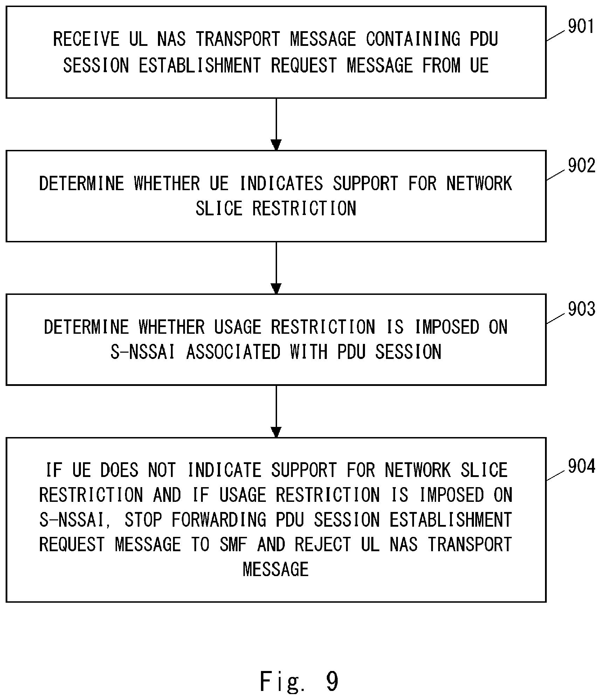

Fig. 9 shows an example of the operation of the AMF 2 and provides a modification to the operation shown in Fig. 8. Step 901 is the same as step 801 in Fig. 8. Specifically, the AMF 2 receives a UL NAS Transport message containing a PDU Session Establishment Request message from the UE 1. In step 902, the AMF 2 determines whether the UE 1 indicates support for Network Slice Restriction (NSR). In one example, the AMF 2 may determine whether the received PDU Session Establishment Request message contains an indication of NSR support. In another example, the AMF 2 may determine whether the UE 1 has indicated support for NSR at the time of a previous registration procedure. More specifically, the AMF 2 may determine if the context of the UE 1 stored in the AMF 2 indicates support for NSR. the indication of support for NSR may be capability information of the UE 1.

Step 903 is the same as step 802 in Fig. 8. The AMF 2 determines whether a usage restriction is imposed on an S-NSSAI associated with the PDU Session requested by the UE 1. The sequence of steps 902 and 903 is not limited to that shown in Fig. 9. The decision in step 902 may be made after the decision in step 903, or it may be made simultaneously with the decision in step 903.

In step 904, if the UE 1 does not indicate support for NSR and a usage restriction is imposed on the S-NSSAI in question, the AMF 2 stops forwarding the PDU Session Establishment Request message to the SMF 3 and rejects the UL NAS Transport message.

According to the operation in Fig. 9, the AMF 2 can reject a PDU Session establishment request regarding a slice with imposed usage restrictions received from a UE that does not support NSR (e.g., a pre-Release 18 UE).

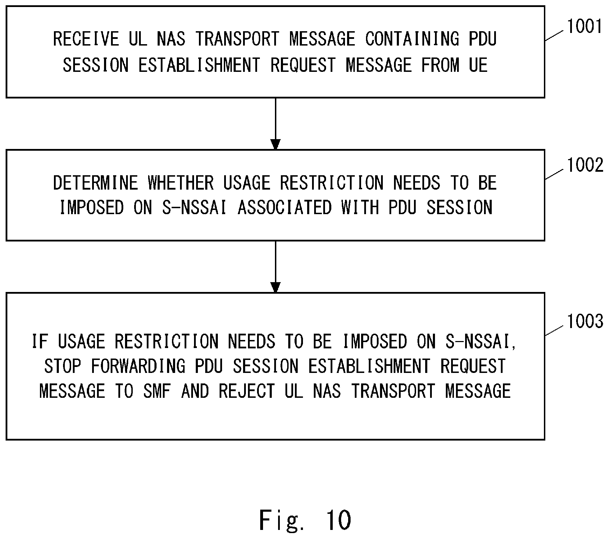

Fig. 10 shows an example of the operation of the AMF 2 and provides a modification to the operation shown in Fig. 8. Step 901 is the same as step 801 in Fig. 8. Specifically, the AMF 2 receives a UL NAS Transport message containing a PDU Session Establishment Request message from the UE 1. In step 1002, the AMF 2 determines whether a usage restriction needs to be imposed on an S-NSSAI associated with the PDU Session requested by the UE 1. In step 903, the AMF 2 stops forwarding the PDU Session Establishment Request message to SMF 3 and rejects the UL NAS Transport message if a usage restriction needs to be imposed on the S-NSSAI in question.

The operation of Fig. 10 allows the AMF 2 to promptly reject a PDU Session Establishment Request for a network slice on which a usage restriction needs to be imposed when the usage restriction of the network slice is activated concurrently with the receipt of the PDU Session Establishment Request.

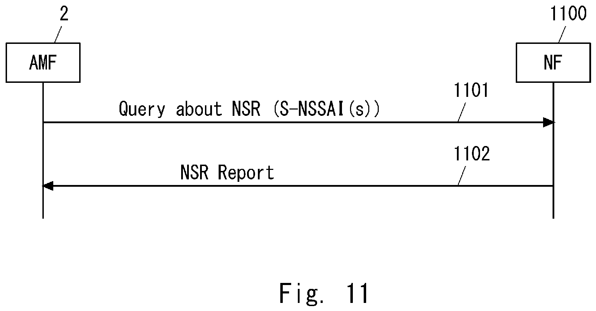

Fig. 11 shows a modification of the signaling shown in Fig. 7. In some implementations, the AMF 2 may receive information about NSR from another Network Function (NF) 1100. The NF 1100 may be the NSSF 4, UDM 8, or UDR described above. The NF1100 may be another existing NF in the 5GC, e.g., Policy Control Function (PCF) or Network Data Analytics Function (NWDAF). Alternatively, the NF 1100 may be a new network function in the 5GC. In step 1101, the AMF 2 queries the NF 1100 for information about NSR. In step 1102, the AMF 2 receives a report (e.g., NSR report) containing information about NSR from the NF 1100.

This embodiment allows the AMF to control the forwarding of an SM message (PDU Session Establishment Request message) to the SMF, taking into account the usage restrictions of a network slice.

### Fourth Embodiment

An example configuration of a communication network according to this embodiment is the same as the example described with reference to Fig. 1. This embodiment provides a modification to the third embodiment.

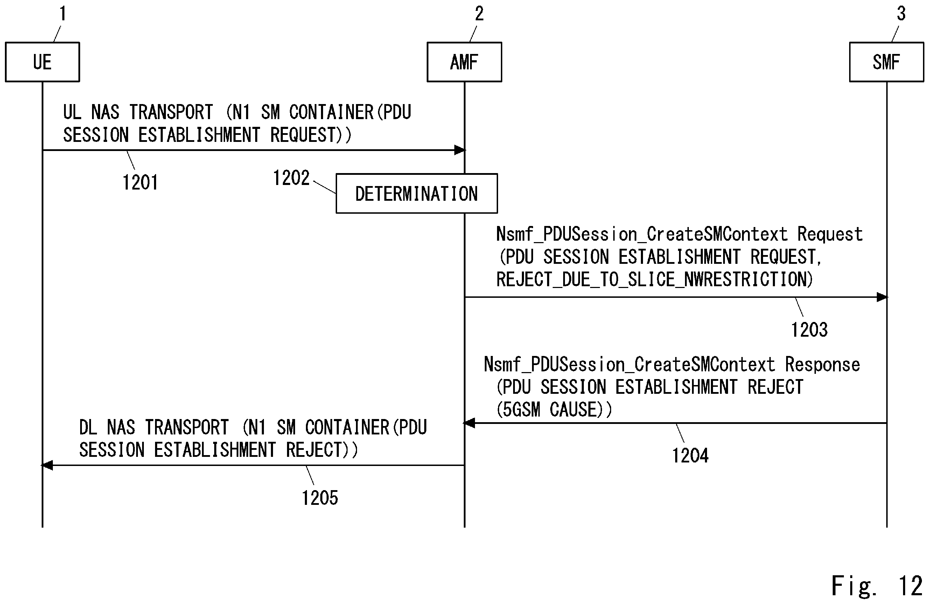

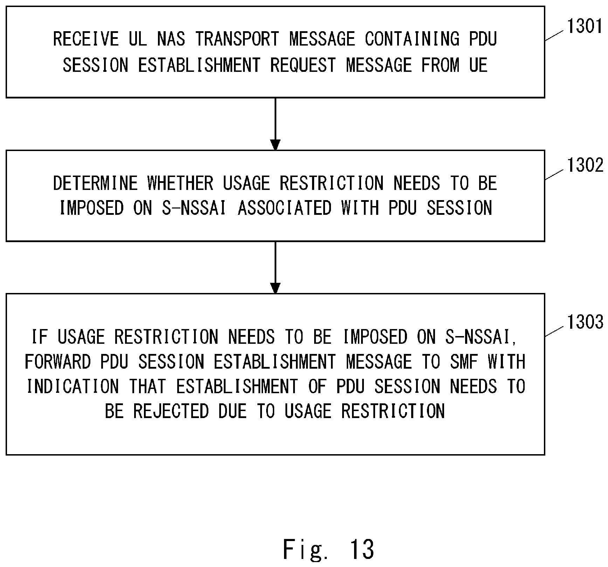

Fig. 12 shows an example of signaling among the UE 1, AMF 2, and SMF 3. Fig. 13 shows an example of the operation of the AMF 2. Step 1201 is the same as step 701 in Fig. 7. Specifically, the UE 1 sends a UL NAS Transport message containing an N1 SM container (PDU Session Establishment Request) to the AMF 2 via the AN 5. In other words, the AMF 2 receives a UL NAS Transport message containing a PDU Session Establishment Request message from the UE 1 (step 1301).

The AMF 2 manages whether there are usage restrictions on a network slice identified by each of one or more S-NSSAIs. Usage restrictions on a network slice may include at least one of: a restriction on radio frequencies (e.g., frequency bands or sub-bands) with which the network slice is available, a restriction on radio access technologies with which the network slice is available, a restriction on geographic areas in which the network slice is available, a restriction on applications with which the network slice is available, or a restriction based on priorities among multiple network slices.

In one example, the AMF 2 may recognize that a given S-NSSAI is in an NSR state in which it is available only in one or more specific frequency bands, or that it is in an NSR state in which it is not available in one or more specific frequency bands. The AMF 2 may recognize that a given S-NSSAI is in an NSR state in which it is available only in one or more specific RATs, or that it is in an NSR state in which it is not available in one or more specific RATs. In one example, the AMF 2 may recognize that a given S-NSSAI is in an NSR state where it is available only in one or more specific geographic areas, or that it is in an NSR state where it is not available in one or more specific geographic areas. Each geographic area may be a tracking area or a cell. In one example, the AMF 2 may recognize that a given S-NSSAI is in an NSR state where it is available only for one or more specific applications (or services), or that it is in an NSR state where it is not available for one or more specific applications (or services). In one example, the AMF 2 may recognize that a plurality of S-NSSAIs are in an NSR state where there are priorities among multiple network slices (S-NSSAIs). For example, the AMF 2 may recognize that when a network slice given a higher priority is being used by the UE 1, a network slice with a lower priority cannot be used by the same UE 1 at the same time. Alternatively, the AMF 2 may recognize that a given S-NSSAI (network slice) is in an NSR state where it cannot be used simultaneously with another S-NSSAI (network slice). Similar to the operation shown in Fig. 11, the AMF2 may receive information about NSR from another network function.

In steps 1202 and 1302, the AMF 2 determines whether or not a usage restriction needs to be imposed on (or is imposed on) an S-NSSAI associated with the PDU Session requested by the UE 1. In steps 1203 and 1303, if a usage restriction needs to be imposed on (or is imposed on) the S-NSSAI, the AMF 2 forwards the PDU Session Establishment message to the SMF 3 with an indication that the establishment of the PDU Session needs to be rejected due to the usage restriction. Specifically, the AMF 2 sends to the SMF 3 a control message (e.g., Nsmf_PDUSession_CreateSMContext Request) that contains the PDU Session Establishment message and the indication. The indication may be, for example,
"REJECT_DUE_TO_SLICE_NWRESTRICTION".

In step 1204, the SMF 3 rejects the establishment of the PDU Session if it receives the PDU Session Establishment message with the indication that the establishment of the PDU Session should be rejected due to usage restrictions. The SMF 3 sends a PDU Session Establishment Reject message to the UE 1 via the AMF 2 (steps 1204 and 1205). The PDU Session Establishment Reject message may include a new 5GSM cause value indicating slice usage restriction.

According to this embodiment, the AMF 2 and SMF 3 can reject a request for establishing a PDU Session regarding a network slice on which a usage restriction has been imposed. This contributes to achieving session management adapted to restrictions on the use of network slices.

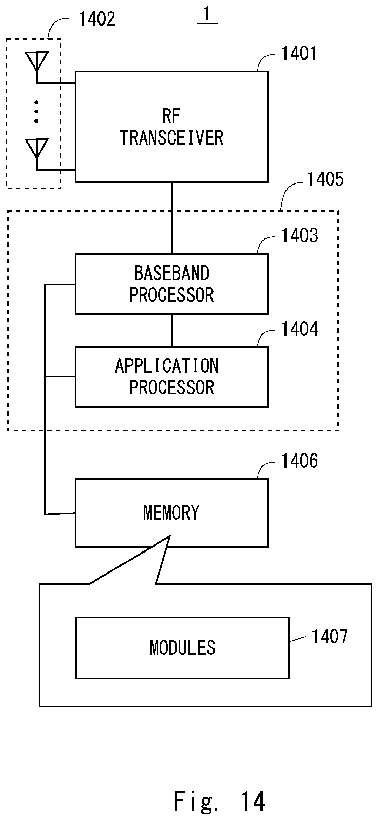

The following provides configuration examples of the UE 1, the AMF 2, and the SMF 3 according to the above-described embodiments. Fig. 14 is a block diagram showing an example configuration of the UE 1. A Radio Frequency (RF) transceiver 1401 performs analog RF signal processing to communicate with RAN nodes. The RF transceiver 1401 may include a plurality of transceivers. The analog RF signal processing performed by the RF transceiver 1401 includes frequency up-conversion, frequency down-conversion, and amplification. The RF transceiver 1401 is coupled to an antenna array 1402 and a baseband processor 1403. The RF transceiver 1401 receives modulated symbol data (or OFDM symbol data) from the baseband processor 1403, generates a transmission RF signal, and supplies the transmission RF signal to the antenna array 1402. Further, the RF transceiver 1401 generates a baseband reception signal based on a reception RF signal received by the antenna array 1402 and supplies the baseband reception signal to the baseband processor 1403. The RF transceiver 1401 may include an analog beamformer circuit for beam forming. The analog beamformer circuit includes, for example, a plurality of phase shifters and a plurality of power amplifiers.

The baseband processor 1403 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame) (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 1403 may include, for example, signal processing of Service Data Adaptation Protocol (SDAP), Packet Data Convergence Protocol (PDCP), Radio Link Control (RLC), Medium Access Control (MAC), and Physical (PHY) layers. Further, the control-plane processing performed by the baseband processor 1403 may include processing of Non-Access Stratum (NAS) protocols, Radio Resource Control (RRC) protocols, and MAC Control Elements (CEs).

The baseband processor 1403 may perform Multiple Input Multiple Output (MIMO) encoding and pre-coding for beam forming.

The baseband processor 1403 may include a modem processor (e.g., Digital Signal Processor (DSP)) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 1404 described in the following.

The application processor 1404 is also referred to as a CPU, an MPU, a microprocessor, or a processor core. The application processor 1404 may include a plurality of processors (or processor cores). The application processor 1404 loads a system software program (Operating System (OS)) and various application programs (e.g., a call application, a WEB browser, a mailer, a camera operation application, and a music player application) from a memory 1406 or from another memory (not shown) and executes these programs, thereby providing various functions of the UE 1.

In some implementations, as represented by a dashed line (1405) in Fig. 14, the baseband processor 1403 and the application processor 1404 may be integrated on a single chip. In other words, the baseband processor 1403 and the application processor 1404 may be implemented in a single System on Chip (SoC) device 1405. The SoC device may be referred to as a Large-Scale Integration (LSI) or a chipset.

The memory 1406 is a volatile memory, a non-volatile memory, or a combination thereof. The memory 1406 may include a plurality of memory devices that are physically independent from each other. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1406 may include, for example, an external memory device that can be accessed from the baseband processor 1403, the application processor 1404, and the SoC 1405. The memory 1406 may include an internal memory device that is integrated in the baseband processor 1403, the application processor 1404, or the SoC 1405. Further, the memory 1406 may include a memory in a Universal Integrated Circuit Card (UICC).

The memory 1406 may store one or more software modules (computer programs) 1407 including instructions and data to perform the processing by the UE 1 described in the above embodiments. In some implementations, the baseband processor 1403 or the application processor 1404 may load these software modules 1407 from the memory 1406 and execute the loaded software modules, thereby performing the processing of the UE 1 described in the above embodiments with reference to the drawings.

The control-plane processing and operations performed by the UE 1 described in the above embodiments can be achieved by elements other than the RF transceiver 1401 and the antenna array 1402, i.e., achieved by the memory 1406, which stores the software modules 1407, and one or both of the baseband processor 1403 and the application processor 1404.

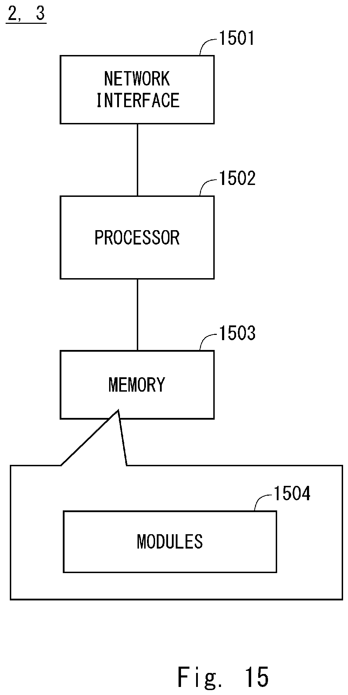

Fig. 15 shows an example configuration of the AMF 2. The SMF 3 may also have the configuration shown in Fig. 15. Referring to Fig. 15, the AMF 2 includes a network interface 1501, a processor 1502, and a memory 1503. The network interface 1501 is used to communicate with, for example, (R)AN nodes and with other network functions (NFs) or nodes in the 5GC. The other NFs or nodes in the 5GC include, for example, UDM, AUSF, SMF, and PCF. The network interface 1501 may include, for example, a network interface card (NIC) conforming to the IEEE 802.3 series.

The processor 1502 may be, for example, a microprocessor, a Micro Processing Unit (MPU), or a Central Processing Unit (CPU). The processor 1502 may include a plurality of processors.

The memory 1503 is composed of a volatile memory and a nonvolatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1503 may include a storage located apart from the processor 1502. In this case, the processor 1502 may access the memory 1503 via the network interface 1501 or an I/O interface.

The memory 1503 may store one or more software modules (computer programs) 1504 including instructions and data to perform the processing of the AMF 2 described in the above embodiments. In some implementations, the processor 1502 may be configured to load the one or more software modules 1504 from the memory 1503 and execute the loaded software modules, thereby performing the processing of the AMF 2 described in the above embodiments.

As described using Figs. 14 and 15, each of the processors in the UE 1, AMF 2, and SMF 3 according to the embodiments described above executes one or more programs, containing a set of instructions, to cause a computer to perform an algorithm described with reference to the drawings. These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magnetooptical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). These programs may be provided to a computer using any type of transitory computer readable media. Examples of transitory computer readable media include electric signals, optical signals, and electromagnetic waves. Transitory computer readable media can provide the programs to a computer via a wired communication line (e.g., electric wires, and optical fibers) or a wireless communication line.

The above-described embodiments are merely examples of applications of the technical ideas obtained by the inventors. These technical ideas are not limited to the above-described embodiments and various modifications can be made thereto.

The whole or part of the embodiments disclosed above can be described as, but not limited to, the following supplementary notes.

### (Supplementary Note A1)

A core network node for mobility management, comprising:
at least one memory; and
at least one processor coupled to the at least one memory and configured to:
   in response to an update of a restriction on use of a network slice, request a core network node for session management to release an established PDU Session associated with the network slice or deactivate user plane resources of the established PDU Session.

### (Supplementary Note A2)

The core network node for mobility management according to Supplementary Note A1, wherein the restriction includes at least one of: a restriction on radio frequencies with which the network slice is available, a restriction on radio access technologies with which the network slice is available, a restriction on geographic areas in which the network slice is available, a restriction on applications with which the network slice is available, or a restriction based on priorities among multiple network slices.

### (Supplementary Note A3)

A method performed by a core network node for mobility management, the method comprising:
in response to an update of a restriction on use of a network slice, requesting a core network node for session management to release an established PDU Session associated with the network slice or deactivate user plane resources of the established PDU Session.

### (Supplementary Note B 1)

A core network node for mobility management, comprising:
at least one memory; and
at least one processor coupled to the at least one memory and configured to:
   receive from a User Equipment (UE) a first Non-Access Stratum (NAS) message containing a Session Management (SM) message requesting establishment of a PDU Session;
   determine whether or not a usage restriction is, or needs to be, imposed on a network slice identifier associated with the PDU Session; and
   if the usage restriction is imposed or needs to be imposed on the network slice identifier, stop forwarding the SM message to a core network node for session management and reject the NAS message,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

### (Supplementary Note B2)

The core network node for mobility management according to Supplementary Note B 1, wherein the at least one processor is configured to stop forwarding the SM message to the core network node for session management and reject the NAS message if the UE does not indicate support for network slice restrictions and if the usage restriction is imposed on the network slice identifier.

### (Supplementary Note B3)

The core network node for mobility management according to Supplementary Note B1 or B2, wherein the at least one processor is configured to send a second NAS message to the UE that includes a cause value indicating that the SM message is not forwarded due to the usage restriction.

### (Supplementary Note B4)

The core network node for mobility management according to any one of Supplementary Notes B1 to B3, wherein the at least one processor is configured to receive information indicating the usage restriction from another network function.

### (Supplementary Note B5)

A method performed by a core network node for mobility management, the method comprising:
receiving from a User Equipment (UE) a first Non-Access Stratum (NAS) message containing a Session Management (SM) message requesting establishment of a PDU Session;
   determining whether or not a usage restriction is, or needs to be, imposed on a network slice identifier associated with the PDU Session; and
   If the usage restriction is imposed or needs to be imposed on the network slice identifier, stopping forwarding the SM message to a core network node for session management and rejecting the NAS message,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

### (Supplementary Note B6)

A program for causing a computer to perform a method for a core network node for mobility management, the method comprising:
receiving from a User Equipment (UE) a first Non-Access Stratum (NAS) message containing a Session Management (SM) message requesting establishment of a PDU Session;
   determining whether or not a usage restriction is, or needs to be, imposed on a network slice identifier associated with the PDU Session; and
   If the usage restriction is imposed or needs to be imposed on the network slice identifier, stopping forwarding the SM message to a core network node for session management and rejecting the NAS message,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

### (Supplementary Note C1)

A core network node for mobility management, comprising:
at least one memory; and
at least one processor coupled to the at least one memory and configured to:
   receive from a User Equipment (UE) a Non-Access Stratum (NAS) message containing a Session Management (SM) message requesting establishment of a PDU Session;
   determine whether or not a usage restriction is, or needs to be, imposed on a network slice identifier associated with the PDU Session; and
   if the usage restriction is imposed or needs to be imposed on the network slice identifier, forward the SM message to a core network node for session management with an indication that the establishment of the PDU Session needs to be rejected due to the usage restriction,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

### (Supplementary Note C2)

The core network node for mobility management according to Supplementary Note C1, wherein the at least one processor is configured to receive information indicating the usage restriction from another network function.

### (Supplementary Note C3)

A core network node for session management, comprising:
at least one memory; and
at least one processor coupled to the at least one memory and configured to:
   receive, from a core network node for mobility management, a control message containing a first Session Management (SM) message requesting establishment of a PDU Session for a User Equipment (UE); and
   reject the establishment of the PDU Session if the control message contains an indication that the establishment of the PDU Session needs to be rejected due to a usage restriction,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

### (Supplementary Note C4)

The core network node for session management according to Supplementary Note C3, wherein the at least one processor is configured to send a second SM message, including a cause value indicating that the establishment of the PDU Session is rejected due to the usage restriction, to the UE via the core network node for mobility management.

### (Supplementary Note C5)

A method performed by a core network node for mobility management, the method comprising:
receiving from a User Equipment (UE) a Non-Access Stratum (NAS) message containing a Session Management (SM) message requesting an establishment of a PDU Session;
determining whether or not a usage restriction is, or needs to be, imposed on a network slice identifier associated with the PDU Session; and
if the usage restriction is imposed or needs to be imposed on the network slice identifier, forwarding the SM message to a core network node for session management with an indication that the establishment of the PDU Session needs to be rejected due to the usage restriction,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

### (Supplementary Note C6)

A method performed by a core network node for session management, the method comprising:
receiving, from a core network node for mobility management, a control message containing a first Session Management (SM) message requesting establishment of a PDU Session for a User Equipment (UE); and
rejecting the establishment of the PDU Session if the control message contains an indication that the establishment of the PDU Session needs to be rejected due to a usage restriction,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

### (Supplementary Note 1)

A core network node for session management, comprising:
at least one memory; and
at least one processor coupled to the at least one memory and configured to:
   receive, from a core network node for mobility management, a report indicating that an update to a restriction on use of a network slice by a User Equipment (UE) has occurred; and
   control release or modification of an established PDU Session of the UE associated with the network slice in response to receiving the report.

### (Supplementary Note 2)

The core network node for session management according to Supplementary Note 1, wherein the at least one processor is configured to initiate releasing the established PDU Session or deactivating user plane resources of the established PDU Session if the report indicates that the use of the network slice is restricted.

### (Supplementary Note 3)

The core network node for session management according to Supplementary Note 1 or 2, wherein the at least one processor is configured to reject modification of the established PDU Session requested by the UE if the report indicates that the use of the network slice is restricted.

### (Supplementary Note 4)

The core network node for session management according to any one of Supplementary Notes 1 to 3, wherein
the report includes information indicating whether the restriction on the use of the network slice is activated, deactivated, or unknown, and
the at least one processor is configured to control the release or modification of the established PDU Session associated with the network slice if the information indicates that the restriction is activated.

### (Supplementary Note 5)

The core network node for session management according to any one of Supplementary Notes 1 to 4, wherein the at least one processor is configured to:
send a request to the core network node for mobility management to subscribe to a notification service regarding restrictions on use of the network slice by the UE; and
receive a report corresponding to the request.

### (Supplementary Note 6)

A core network node for mobility management, comprising:
at least one memory; and
at least one processor coupled to the at least one memory and configured to:
   in response to an update of a restriction on use of a network slice by a User Equipment (UE), send a report to a core network node for session management indicating that the update of the restriction has occurred.

### (Supplementary Note 7)

The core network node for mobility management according to Supplementary Note 6, wherein the restriction includes at least one of: a restriction on radio frequencies with which the network slice is available, a restriction on radio access technologies with which the network slice is available, a restriction on geographic areas in which the network slice is available, a restriction on applications with which the network slice is available, or a restriction based on priorities among multiple network slices.

### (Supplementary Note 8)

The core network node for mobility management according to Supplementary Note 6 or 7, wherein the report includes information indicating whether the restriction on the use of the network slice is activated, deactivated, or unknown.

### (Supplementary Note 9)

The core network node for mobility management according to any one of Supplementary Notes 6 to 8, wherein the at least one processor is configured to:
receive, from the core network node for session management, a request to subscribe to a notification service regarding restrictions on use of the network slice by the UE; and
send a report corresponding to the request to the core network node for session management.

### (Supplementary Note 10)

A method performed by a core network node for session management, the method comprising:
receiving, from a core network node for mobility management, a report indicating that an update to a restriction on use of a network slice by a User Equipment (UE) has occurred; and
controlling release or modification of an established PDU Session of the UE associated with the network slice in response to receiving the report.

### (Supplementary Note 11)

A method performed by a core network node for mobility management, the method comprising:
in response to an update of a restriction on use of a network slice by a User Equipment (UE), sending a report to a core network node for session management indicating that the update of the restriction has occurred.

### (Supplementary Note 12)

A program for causing a computer to perform a method for a core network node for session management, the method comprising:
receiving, from a core network node for mobility management, a report indicating that an update to a restriction on use of a network slice by a User Equipment (UE) has occurred; and
controlling release or modification of an established PDU Session of the UE associated with the network slice in response to receiving the report.

### (Supplementary Note 13)

A program for causing a computer to perform a method for a core network node for mobility management, the method comprising:
in response to an update of a restriction on use of a network slice by a User Equipment (UE), sending a report to a core network node for session management indicating that the update of the restriction has occurred.

This application is based upon and claims the benefit of priority from Japanese Patent Application No. 2020-174588, filed on October 16, 2020, the disclosure of which is incorporated herein in its entirety by reference.

### Reference Signs List

- 1: UE
- 2: AMF
- 3: SMF
- 4: NSSF
- 5: AN
- 6: UPF
- 7: DN
- 8: UDM
- 1403: Baseband Processor
- 1404: Application Processor
- 1406: Memory
- 1407: Modules
- 1502: Processor
- 1503: Memory
- 1504: Modules

## Claims

1. A core network node for session management, comprising:
at least one memory; and
at least one processor coupled to the at least one memory and configured to:
receive, from a core network node for mobility management, a report indicating that an update to a restriction on use of a network slice by a User Equipment (UE) has occurred; and
control release or modification of an established PDU Session of the UE associated with the network slice in response to receiving the report.

2. The core network node for session management according to claim 1, wherein the at least one processor is configured to initiate releasing the established PDU Session or deactivating user plane resources of the established PDU Session if the report indicates that the use of the network slice is restricted.

3. The core network node for session management according to claim 1 or 2, wherein the at least one processor is configured to reject modification of the established PDU Session requested by the UE if the report indicates that the use of the network slice is restricted.

4. The core network node for session management according to any one of claims 1 to 3, wherein
the report includes information indicating whether the restriction on the use of the network slice is activated, deactivated, or unknown, and
the at least one processor is configured to control the release or modification of the established PDU Session associated with the network slice if the information indicates that the restriction is activated.

5. The core network node for session management according to any one of claims 1 to 4, wherein the at least one processor is configured to:
send a request to the core network node for mobility management to subscribe to a notification service regarding restrictions on use of the network slice by the UE; and
receive a report corresponding to the request.

6. A core network node for mobility management, comprising:
at least one memory; and
at least one processor coupled to the at least one memory and configured to:
in response to an update of a restriction on use of a network slice by a User Equipment (UE), send a report to a core network node for session management indicating that the update of the restriction has occurred.

7. The core network node for mobility management according to claim 6, wherein the restriction includes at least one of: a restriction on radio frequencies with which the network slice is available, a restriction on radio access technologies with which the network slice is available, a restriction on geographic areas in which the network slice is available, a restriction on applications with which the network slice is available, or a restriction based on priorities among multiple network slices.

8. The core network node for mobility management according to claim 6 or 7, wherein the report includes information indicating whether the restriction on the use of the network slice is activated, deactivated, or unknown.

9. The core network node for mobility management according to any one of claims 6 to 8, wherein the at least one processor is configured to:
receive, from the core network node for session management, a request to subscribe to a notification service regarding restrictions on use of the network slice by the UE; and
send a report corresponding to the request to the core network node for session management.

10. A method performed by a core network node for session management, the method comprising:
receiving, from a core network node for mobility management, a report indicating that an update to a restriction on use of a network slice by a User Equipment (UE) has occurred; and
controlling release or modification of an established PDU Session of the UE associated with the network slice in response to receiving the report.

11. A method performed by a core network node for mobility management, the method comprising:
in response to an update of a restriction on use of a network slice by a User Equipment (UE), sending a report to a core network node for session management indicating that the update of the restriction has occurred.

12. A non-transitory computer readable medium storing a program for causing a computer to perform a method for a core network node for session management, the method comprising:
receiving, from a core network node for mobility management, a report indicating that an update to a restriction on use of a network slice by a User Equipment (UE) has occurred; and
controlling release or modification of an established PDU Session of the UE associated with the network slice in response to receiving the report.

13. A non-transitory computer readable medium storing a program for causing a computer to perform a method for a core network node for mobility management, the method comprising:
in response to an update of a restriction on use of a network slice by a User Equipment (UE), sending a report to a core network node for session management indicating that the update of the restriction has occurred.

14. A core network node for mobility management, comprising:
at least one memory; and
at least one processor coupled to the at least one memory and configured to:
in response to an update of a restriction on use of a network slice, request a core network node for session management to release an established PDU Session associated with the network slice or deactivate user plane resources of the established PDU Session.

15. The core network node for mobility management according to claim 14, wherein the restriction includes at least one of: a restriction on radio frequencies with which the network slice is available, a restriction on radio access technologies with which the network slice is available, a restriction on geographic areas in which the network slice is available, a restriction on applications with which the network slice is available, or a restriction based on priorities among multiple network slices.

16. A method performed by a core network node for mobility management, the method comprising:
in response to an update of a restriction on use of a network slice, requesting a core network node for session management to release an established PDU Session associated with the network slice or deactivate user plane resources of the established PDU Session.

17. A core network node for mobility management, comprising:
at least one memory; and
at least one processor coupled to the at least one memory and configured to:
receive from a User Equipment (UE) a first Non-Access Stratum (NAS) message containing a Session Management (SM) message requesting establishment of a PDU Session;
determine whether or not a usage restriction is, or needs to be, imposed on a network slice identifier associated with the PDU Session; and
if the usage restriction is imposed or needs to be imposed on the network slice identifier, stop forwarding the SM message to a core network node for session management and reject the NAS message,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

18. The core network node for mobility management according to claim 17, wherein the at least one processor is configured to stop forwarding the SM message to the core network node for session management and reject the NAS message if the UE does not indicate support for network slice restrictions and if the usage restriction is imposed on the network slice identifier.

19. The core network node for mobility management according to claim 17 or 18, wherein the at least one processor is configured to send a second NAS message to the UE that includes a cause value indicating that the SM message is not forwarded due to the usage restriction.

20. The core network node for mobility management according to any one of claims 17 to 19, wherein the at least one processor is configured to receive information indicating the usage restriction from another network function.

21. A method performed by a core network node for mobility management, the method comprising:
receiving from a User Equipment (UE) a first Non-Access Stratum (NAS) message containing a Session Management (SM) message requesting establishment of a PDU Session;
determining whether or not a usage restriction is, or needs to be, imposed on a network slice identifier associated with the PDU Session; and
If the usage restriction is imposed or needs to be imposed on the network slice identifier, stopping forwarding the SM message to a core network node for session management and rejecting the NAS message,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

22. A non-transitory computer readable medium storing a program for causing a computer to perform a method for a core network node for mobility management, the method comprising:
receiving from a User Equipment (UE) a first Non-Access Stratum (NAS) message containing a Session Management (SM) message requesting establishment of a PDU Session;
determining whether or not a usage restriction is, or needs to be, imposed on a network slice identifier associated with the PDU Session; and
If the usage restriction is imposed or needs to be imposed on the network slice identifier, stopping forwarding the SM message to a core network node for session management and rejecting the NAS message,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

23. A core network node for mobility management, comprising:
at least one memory; and
at least one processor coupled to the at least one memory and configured to:
receive from a User Equipment (UE) a Non-Access Stratum (NAS) message containing a Session Management (SM) message requesting establishment of a PDU Session;
determine whether or not a usage restriction is, or needs to be, imposed on a network slice identifier associated with the PDU Session; and
if the usage restriction is imposed or needs to be imposed on the network slice identifier, forward the SM message to a core network node for session management with an indication that the establishment of the PDU Session needs to be rejected due to the usage restriction,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

24. The core network node for mobility management according to claim 23, wherein the at least one processor is configured to receive information indicating the usage restriction from another network function.

25. A core network node for session management, comprising:
at least one memory; and
at least one processor coupled to the at least one memory and configured to:
receive, from a core network node for mobility management, a control message containing a first Session Management (SM) message requesting establishment of a PDU Session for a User Equipment (UE); and
reject the establishment of the PDU Session if the control message contains an indication that the establishment of the PDU Session needs to be rejected due to a usage restriction,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

26. The core network node for session management according to claim 25, wherein the at least one processor is configured to send a second SM message, including a cause value indicating that the establishment of the PDU Session is rejected due to the usage restriction, to the UE via the core network node for mobility management.

27. A method performed by a core network node for mobility management, the method comprising:
receiving from a User Equipment (UE) a Non-Access Stratum (NAS) message containing a Session Management (SM) message requesting an establishment of a PDU Session;
determining whether or not a usage restriction is, or needs to be, imposed on a network slice identifier associated with the PDU Session; and
if the usage restriction is imposed or needs to be imposed on the network slice identifier, forwarding the SM message to a core network node for session management with an indication that the establishment of the PDU Session needs to be rejected due to the usage restriction,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.

28. A method performed by a core network node for session management, the method comprising:
receiving, from a core network node for mobility management, a control message containing a first Session Management (SM) message requesting establishment of a PDU Session for a User Equipment (UE); and
rejecting the establishment of the PDU Session if the control message contains an indication that the establishment of the PDU Session needs to be rejected due to a usage restriction,
wherein the usage restriction includes at least one of: a restriction on radio frequencies with which a network slice is available, a restriction on radio access technologies with which a network slice is available, a restriction on geographic areas in which a network slice is available, a restriction on applications with which a network slice is available, or a restriction based on priorities among multiple network slices.
